# EUROPEAN PATENT APPLICATION

(11) **EP 4 745 427 A1**
(43) Date of publication of application: **20.05.2026**
(21) Application number: 24835980.4
(22) Date of filing: 27.06.2024
(51) Int. Cl.: F16F 7/12, B60R 19/18, F16F 7/00

(54) **IMPACT ABSORBING STRUCTURE AND BUMPER CORE MATERIAL**

(30) Priority: 03.07.2023 JP 2023109534; 14.09.2023 JP 2023149596
(71) Applicant: Nature Architects Inc., Tokyo 103-0013 (JP)
(72) Inventor: OKA Yohei, Tokyo 103-0013 (JP)
(74) Representative: Kuhnen & Wacker Patent- und Rechtsanwaltsbüro PartG mbB
(86) International application number: PCT/JP2024/023400
(87) International publication number: WO 2025/009467

(57) **Abstract**

An impact-absorbing structure includes: first and second support portions disposed with a space therebetween; and a plurality of deformable portions each connected to the first and second support portions via first and second corresponding connecting portions, respectively. Each of the plurality of deformable portions includes: first and second beam portions that extend linearly while being inclined to the same side with respect to a corresponding straight line passing through the first and second corresponding connecting portions, as the first and second beam portions become farther away from the first and second corresponding connecting portions; and a third beam portion connected to end portions of the first and second beam portions on sides opposite to the first and second corresponding connecting portions, the third beam portion extending in a curved shape that is convex toward a side approaching the corresponding straight line.

## Description

### Technical Field

The present disclosure relates to an impact-absorbing structure and a bumper core member.

### Background

Patent Document 1 discloses a bumper core member made of a polypropylene-based resin foam. Such a bumper core member is, for example, provided on an inner side of a front bumper of an automobile vehicle, and absorbs collision energy by being deformed so as to crush itself when the vehicle collides with an object in front, thereby protecting a vehicle body and occupants inside the vehicle.

### Citation List

### Patent Literature

PTL1: Japanese Patent Laid-open No. 2004-168077

### Summary of Invention

### Technical Problem

Since the bumper core member disclosed in Patent Document 1 is made of a polypropylene-based resin foam, it is possible to prevent a large impact force from being generated on a pedestrian when the vehicle collides with the pedestrian. However, because an amount of energy that can be absorbed by deformation of the bumper core member itself is small, there is a concern that damage to the vehicle cannot be prevented when the vehicle collides with an object. Therefore, in order to achieve both improvement of collision safety when a vehicle collides with a person and further prevention of vehicle damage by absorbing collision energy, there is a demand for devising an impact-absorbing structure, used for a bumper core member or the like, that is capable of suppressing a reaction force generated at an initial stage of collision while securing a larger amount of absorbable collision energy.

### Solution to Problem

According to a first aspect of the present disclosure, there is provided an impact-absorbing structure including: a first support portion and a second support portion disposed with a space therebetween; and a plurality of deformable portions each connected to the first and second support portions via a first corresponding connecting portion and a second corresponding connecting portion, respectively. Each of the plurality of deformable portions includes: a first beam portion and a second beam portion that extend linearly while being inclined to the same side with respect to a corresponding straight line passing through the first and second corresponding connecting portions, as the first and second beam portions become farther away from the first and second corresponding connecting portions; and a third beam portion connected to end portions of the first and second beam portions on sides opposite to the first and second corresponding connecting portions, the third beam portion extending in a curved shape that is convex toward a side approaching the corresponding straight line. At least a part of the plurality of deformable portions is arranged such that a first deformable portion, in which the first and second beam portions extend while being inclined to one side with respect to the corresponding straight line as the first and second beam portions become farther away from the first and second corresponding connecting portions, and a second deformable portion, in which the first and second beam portions extend while being inclined to the other side with respect to the corresponding straight line as the first and second beam portions become farther away from the first and second corresponding connecting portions, are alternately arranged in groups of one or more.

According to a second aspect of the present disclosure, there is provided an impact-absorbing structure including: a first support portion and a second support portion disposed with a space therebetween; and a plurality of deformable portions each connected to the first and second support portions via a first corresponding connecting portion and a second corresponding connecting portion, respectively. Each of the plurality of deformable portions includes: a first beam portion and a second beam portion that extend linearly while being inclined to the same side with respect to a corresponding straight line passing through the first and second corresponding connecting portions, as the first and second beam portions become farther away from the first and second corresponding connecting portions; and a third beam portion connected to end portions of the first and second beam portions on sides opposite to the first and second corresponding connecting portions, the third beam portion extending in a curved shape that is convex toward a side approaching the corresponding straight line. Each of the plurality of deformable portions is configured such that, when a load in a direction along the corresponding straight line is applied to at least one of the first and second support portions, with an increase in a displacement amount of the distance between the first and second support portions,
a first stage occurs in which an inclination angle of each of the first and second beam portions with respect to the corresponding straight line increases while a curvature of the third beam portion decreases until a part of each of the first and second beam portions comes into contact with the first and second support portions; and a second stage occurs in which, in a state where a part of each of the first and second beam portions is in contact with the first and second support portions, the curvature of the third beam portion increases, in this order.

According to a third aspect of the present disclosure, there is provided an impact-absorbing structure including: a first support portion and a second support portion disposed with a space therebetween; and a plurality of deformable portions each connected to the first and second support portions via a first corresponding connecting portion and a second corresponding connecting portion, respectively. each of the plurality of deformable portions includes: a first beam portion and a second beam portion that extend linearly while being inclined to the same side with respect to a corresponding straight line passing through the first and second corresponding connecting portions, as the first and second beam portions become farther away from the first and second corresponding connecting portions; and a third beam portion connected to end portions of the first and second beam portions on sides opposite to the first and second corresponding connecting portions, the third beam portion extending in a curved shape that is convex toward a side approaching the corresponding straight line. The impact-absorbing structure is configured such that, when a load in a direction along the corresponding straight line is applied to at least one of the first and second support portions, the impact-absorbing structure exhibits a first displacement region in which a displacement amount increases while maintaining a first reaction force range, and a second displacement region in which the displacement amount increases while maintaining a second reaction force range that is larger than the first reaction force range.

According to a fourth aspect of the present disclosure, there is provided an impact-absorbing structure including: a first support portion and a second support portion disposed with a space therebetween in a first direction; and a pair of deformable portions provided between the first and second support portions. The pair of deformable portions include: a pair of first linear beam portions that extend such that a distance therebetween gradually increases as the pair of first linear beam portions extend from the first support portion toward the first direction; a pair of second linear beam portions that extend such that a distance therebetween gradually increases as the pair of second linear beam portions extend from the second support portion toward a direction opposite to the first direction; and a pair of arcuate beam portions provided between the pair of first linear beam portions and the pair of second linear beam portions and arranged such that convex portions of respective arcs face each other. the impact-absorbing structure is configured such that, when a load is applied to the first support portion or second support portion along the first direction, the impact-absorbing structure provides a first displacement region in which the impact-absorbing structure is displaced while maintaining a first reaction force range, and a second displacement region in which the impact-absorbing structure is displaced while maintaining a second reaction force range that is larger than the first reaction force range.

Other features and advantages of the present disclosure can be understood from the following description and the accompanying drawings, which are provided by way of example and are non-limiting.

### Brief Description of Drawings

FIG. 1 is a front view illustrating an impact-absorbing structure according to one embodiment of the present disclosure.
FIG. 2 is a diagram illustrating a load-displacement curve representing a relationship between a load applied to the impact-absorbing structure shown in FIG. 1 from an upward direction in the drawing and a displacement amount of the impact-absorbing structure.
FIG. 3 is a diagram illustrating deformation states of the impact-absorbing structure at characteristic stages of the load-displacement curve shown in FIG. 2.
FIG. 4 is a perspective view illustrating an example of a bumper core member including the impact-absorbing structure according to one embodiment of the present disclosure.
FIG. 5 is a front view illustrating an impact-absorbing structure according to another embodiment of the present disclosure.
FIG. 6 is a front view illustrating an impact-absorbing structure according to another embodiment of the present disclosure.
FIG. 7 is a diagram illustrating a load-displacement curve representing a relationship between a load applied to the impact-absorbing structure shown in FIG. 6 from an upward direction in the drawing and a displacement amount of the impact-absorbing structure.
FIG. 8 is a diagram illustrating deformation states of the impact-absorbing structure at characteristic stages of the load-displacement curve shown in FIG. 7.
FIG. 9 is a front view illustrating an impact-absorbing structure according to another embodiment of the present disclosure.
FIG. 10 is a front view illustrating an impact-absorbing structure according to another embodiment of the present disclosure.

### Description of Embodiments

Hereinafter, embodiments of the present disclosure will be described with reference to the drawings.

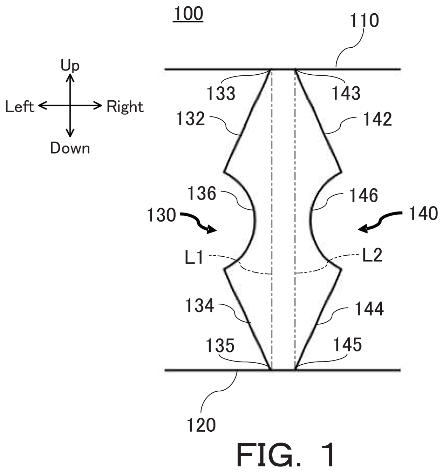

First, a configuration of an impact-absorbing structure 100 according to one embodiment of the present disclosure will be described. FIG. 1 is a front view illustrating the impact-absorbing structure according to one embodiment of the present disclosure.

As shown in FIG. 1, the impact-absorbing structure 100 of the present embodiment includes a first support portion 110 and a second support portion 120 disposed with a space therebetween, and a first deformable portion 130 and a second deformable portion 140 provided between the first and second support portions 110 and 120. The impact-absorbing structure 100 forms a single unit by these members 110 to 140. In FIG. 1, cross-sectional shapes of the members 110 to 140 appearing on a front side of the impact-absorbing structure 100 are schematically illustrated, and the members 110 to 140 have thicknesses and extend in a depth direction toward a back side of the drawing in FIG. 1.

The first and second deformable portions 130 and 140 each include first linear beam portions (first beam portions) 132 and 142, second linear beam portions (second beam portions) 134 and 144, and a first arcuate beam portion (third beam portions) 136 and a second arcuate beam portion (third beam portions) 146 respectively provided between the first linear beam portions 132 and 142 and the second linear beam portions 134 and 144. Each of the first linear beam portions 132 and 142 has one end fixed to the first support portion 110 via a first fixing portion (first corresponding connecting portion) 133 and 143, respectively, and extends such that a distance therebetween increases as the first linear beam portions move away from the first support portion 110. Similarly, each of the second linear beam portions 134 and 144 has one end fixed to the second support portion 120 via a second fixing portion (second corresponding connecting portion) 135 and 145, respectively, and extends such that a distance therebetween increases as the second linear beam portions move away from the second support portion 120. The first and second arcuate beam portions 136 and 146 are arranged such that convex sides of respective arcs face each other. In this manner, the first and second deformable portions 130 and 140 are arranged to be mirror images of each other.

The first and second deformable portions 130 and 140 will be described in more detail below. The first and second deformable portions 130 and 140 are arranged side by side in a left-right direction in FIG. 1. In the first deformable portion 130, the first and second linear beam portions 132 and 134 extend while being inclined to the same side (a left side in FIG. 1) with respect to a corresponding straight line L1 (see a one-dot chain line in FIG. 1) passing through the first and second fixing portions 133 and 135, as the first and second linear beam portions 132 and 134 become farther away from the first and second fixing portions 133 and 135. The first arcuate beam portion 136 is connected to end portions of the first and second linear beam portions 132 and 134 on sides opposite to the first and second fixing portions 133 and 135, and extends in an arcuate shape that is convex toward a side approaching the corresponding straight line L1 (a right side in FIG. 1). In the second deformable portion 140, the first and second linear beam portions 142 and 144 extend while being inclined to the same side (a right side in FIG. 1) with respect to a corresponding straight line L2 (see a two-dot chain line in FIG. 1) passing through the first and second fixing portions 143 and 145, as the first and second linear beam portions 142 and 144 become farther away from the first and second fixing portions 143 and 145. The second arcuate beam portion 146 is connected to end portions of the first and second linear beam portions 142 and 144 on sides opposite to the first and second fixing portions 143 and 145, and extends in an arcuate shape that is convex toward a side approaching the corresponding straight line L2 (a left side in FIG. 1). The corresponding straight lines L1 and L2 are parallel to each other. The first and second linear beam portions 132 and 134 of the first deformable portion 130 and the first and second linear beam portions 142 and 144 of the second deformable portion 140 each extend linearly with the same length and with the same inclination with respect to the corresponding straight lines L1 and L2. The first and second arcuate beam portions 136 and 146 extend in arcuate shapes having the same curvature. The first and second arcuate beam portions 136 and 146 are not limited to arcuate shapes and may have any curved shapes, such as elliptical arc shapes or sine-wave shapes.

In each of the deformable portions 130 and 140, it is preferable that the first linear beam portions 132 and 142, the second linear beam portions 134 and 144, and the first and second arcuate beam portions 136 and 146 provided between the first linear beam portions 132 and 142 and the second linear beam portions 134 and 144 are integrally formed, and it is further preferable that each of the deformable portions 130 and 140 is integrally formed together with the first and second support portions 110 and 120. The impact-absorbing structure 100 of the present embodiment may be configured as an integrally formed member integrally formed by, for example, injection molding, blow molding, extrusion molding, or three-dimensional printing of a resin material, or casting, forging, pressing, cutting, extrusion molding, or three-dimensional printing of a metal material. Alternatively, the impact-absorbing structure 100 of the present embodiment may be such that beam portions in each of the deformable portions 130 and 140 are joined or fastened to each other by any fastening means such as adhesive bonding, welding, bolting, or riveting, and further, each of the deformable portions 130 and 140 and the first and second support portions 110 and 120 may be joined or fastened by similar means.

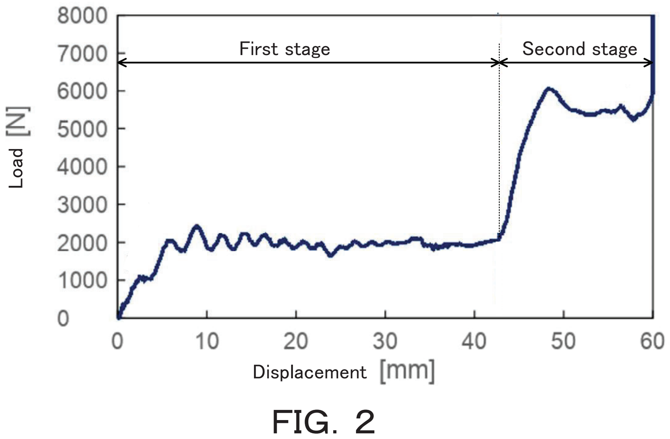

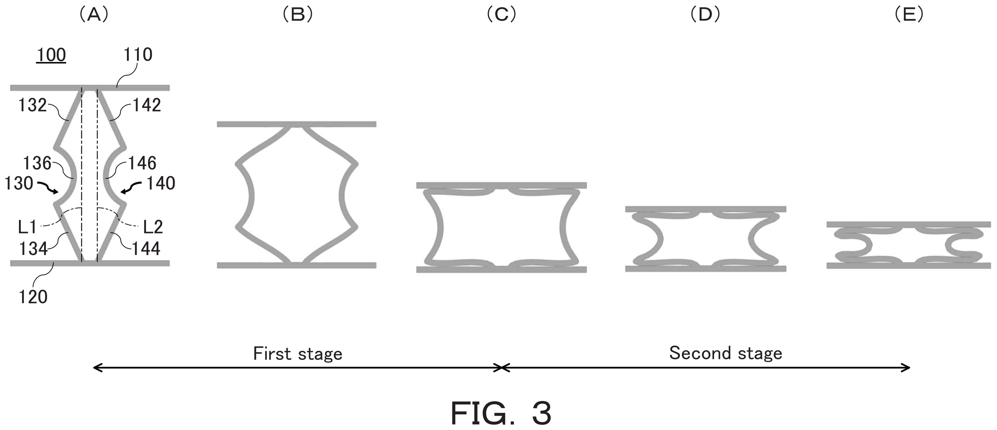

FIG. 2 is a diagram illustrating a load-displacement curve representing a relationship between a load applied to the impact-absorbing structure 100 shown in FIG. 1 from an upward direction in the drawing (a reaction force of the impact-absorbing structure 100) and a displacement amount of the impact-absorbing structure 100 (a displacement amount of the distance between the first and second support portions 110 and 120). FIG. 3 is a diagram illustrating deformation states of the impact-absorbing structure 100 at characteristic stages of the load-displacement curve shown in FIG. 2.

Here, a specific example of the impact-absorbing structure 100 of the present embodiment will be described. In this example, as one example, each configuration of the impact-absorbing structure 100 was configured in accordance with the following requirements.

### (Material)

### - Polycarbonate

### (Dimensions)

- Overall dimensions of the structure 100: width (left-right direction in the drawing) of 33.4 mm, depth (sheet-thickness direction in the drawing) of 150 mm, and height (up-down direction in the drawing) of 80 mm;
- Thickness of each of the members 110 to 140: 2.5 mm;
- Length of the linear beam portions 132 and 134 and the linear beam portions 142 and 144: 29.1 mm;
- Radius and arc length of the arcuate beam portions 136 and 146: radius of 13.8 mm and arc length of 30.8 mm;
- Distance between the first linear beam portions 132 and 142 at connection portions with the first support portion 110 (distance between centers of the respective beam portions): 6 mm;
- Distance between the second linear beam portions 134 and 144 at connection portions with the second support portion 120 (distance between centers of the respective beam portions): 6 mm.

FIGS. 2 and 3 show results of a simulation in which, for the impact-absorbing structure 100 configured in accordance with the above requirements, a load is applied from an upward direction in the drawing, and a load (reaction force) of the impact-absorbing structure 100 and a displacement amount in an up-down direction in the drawing are simulated. As a result of the simulation, the inventors confirmed that the impact-absorbing structure 100 is deformed in the following order of a first stage and a second stage.

In the first stage of deformation of the impact-absorbing structure 100, as shown in FIGS. 3(A) to 3(C), deformation of the first linear beam portions 132 and 142, the second linear beam portions 134 and 144, and the first and second arcuate beam portions 136 and 146 causes the inclination angles of the first linear beam portions 132 and 142 and the second linear beam portions 134 and 144 with respect to the corresponding straight lines L1 and L2 to gradually increase while the curvatures of the first and second arcuate beam portions 136 and 146 gradually decrease, and a part of each of the first linear beam portions 132 and 142 comes into contact with the first support portion 110 and a part of each of the second linear beam portions 134 and 144 comes into contact with the second support portion 120. In this first stage of deformation, as shown in FIG. 2, in a region in which the displacement amount is from 0 mm to approximately 10 mm, the load (reaction force) and the displacement amount gradually increase with substantially linearity as the displacement amount increases, and in a region in which the displacement amount is from approximately 10 mm to 42 mm, the load remains at approximately 1,800 N to 2,500 N even when the displacement amount increases.

In the second stage of deformation of the impact-absorbing structure 100, as shown in FIGS. 3(C) to 3(E), in a state where a part of each of the first linear beam portions 132 and 142 is in contact with the first support portion 110 and a part of each of the second linear beam portions 134 and 144 is in contact with the second support portion 120, deformation of the first and second arcuate beam portions 136 and 146 causes the curvatures of the first and second arcuate beam portions 136 and 146 to gradually increase. In this second stage of deformation, as shown in FIG. 2, in a region in which the displacement amount is from approximately 42 mm to approximately 50 mm, the load (reaction force) and the displacement amount gradually increase with substantially linearity as the displacement amount increases, and in a region in which the displacement amount is from approximately 50 mm to approximately 60 mm, the load remains at approximately 5,500 N to 6,000 N even when the displacement amount increases.

When deformation of the impact-absorbing structure 100 further progresses and reaches a so-called bottoming-out state in which the impact-absorbing structure 100 no longer deforms, only the load increases without an increase in the displacement amount.

As described above, according to the impact-absorbing structure 100 of the present embodiment, a load-displacement characteristic having two-stage deformation regions is provided, including a first displacement region in which displacement occurs while being substantially maintained in a first reaction force range that is relatively low with respect to a load (in FIG. 2, a region from approximately 10 mm to approximately 42 mm), and a second displacement region in which displacement occurs while being substantially maintained in a second reaction force range that is relatively high with respect to a load (in FIG. 2, a region from approximately 50 mm to approximately 60 mm). Accordingly, in the first displacement region, a reaction force can be suppressed, and in the second displacement region, a larger amount of collision energy can be absorbed. That is, it is possible to secure a larger amount of absorbable collision energy while suppressing a reaction force generated at an initial stage of collision. Therefore, when the impact-absorbing structure 100 is used as a bumper core member of a vehicle, in the first displacement region, an impact applied to a pedestrian can be suppressed because the reaction force is relatively small, and in the second displacement region, collision energy of the vehicle can be absorbed in a larger amount. As a result, it becomes possible to achieve both further improvement of collision safety of a person when a vehicle collides with the person and further protection of a vehicle and occupants inside the vehicle by absorbing collision energy.

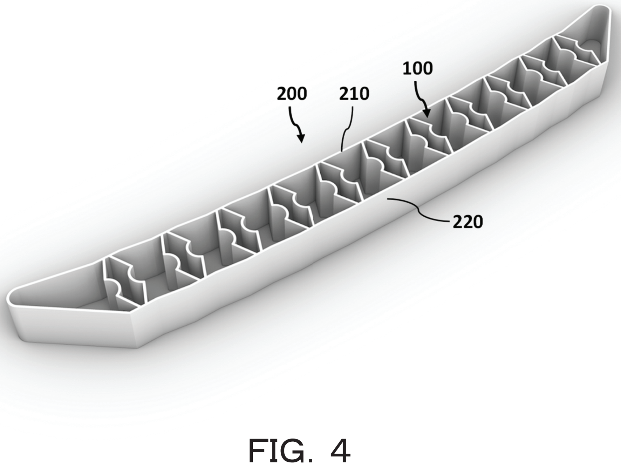

FIG. 4 is a perspective view illustrating an example of a bumper core member 200 including the impact-absorbing structure 100 of the present embodiment.

As shown in FIG. 4, the bumper core member 200 has a configuration in which the impact-absorbing structures 100 of the present embodiment are arranged in parallel in a single row. The bumper core member 200 includes a first side portion 210 and a second side portion 220, and these also serve as the first and second support portions 110 and 120 of the impact-absorbing structures 100. By arranging the bumper core member 200 configured as described above on a rear side of a vehicle bumper, as described above, it is possible to improve collision safety of a person when a vehicle collides with the person, and to protect a vehicle and occupants inside the vehicle by absorbing collision energy.

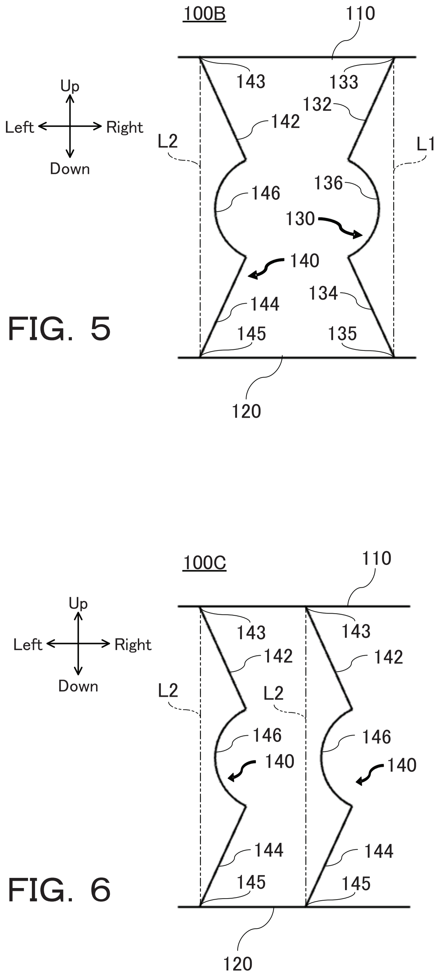

In the above-described embodiment, as in the impact-absorbing structure 100 shown in FIG. 1, the first and second deformable portions 130 and 140 are arranged in this order from a left side in the drawing. However, the present disclosure is not limited thereto. For example, the impact-absorbing structures 100B and 100C shown in FIGS. 5 and 6 may be employed.

The impact-absorbing structure 100B shown in FIG. 5 differs from the impact-absorbing structure 100 shown in FIG. 1 in that an arrangement of the first and second deformable portions 130 and 140 in a left-right direction in the drawing is reversed. That is, in the impact-absorbing structure 100B, the second and first deformable portions 140 and 130 are arranged in this order from the left side in the drawing. Since the impact-absorbing structure 100B is identical to the impact-absorbing structure 100 except for the arrangement in the left-right direction in the drawing being reversed, the impact-absorbing structure 100B can achieve effects similar to those of the impact-absorbing structure 100.

The impact-absorbing structure 100C shown in FIG. 6 differs from the impact-absorbing structure 100 shown in FIG. 1 in that the first deformable portion 130 is replaced with the second deformable portion 140. That is, in the impact-absorbing structure 100C, two second deformable portions 140 are arranged side by side in a left-right direction in the drawing. It can be said that, when the impact-absorbing structure 100C is viewed from a rear side, two first deformable portions 130 are arranged side by side in the left-right direction in the drawing.

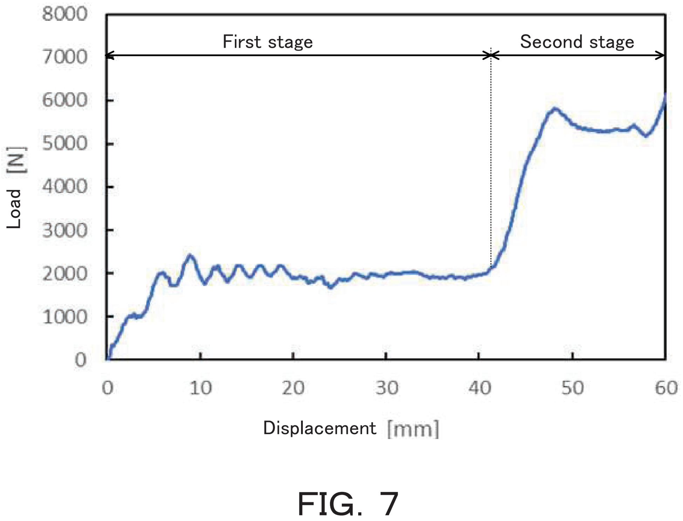

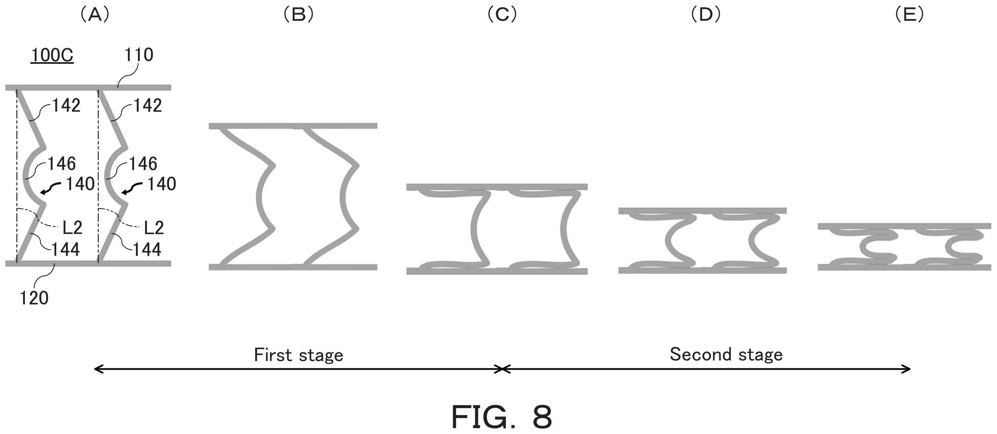

FIG. 7 is a diagram illustrating a load-displacement curve representing a relationship between a load applied to the impact-absorbing structure 100C shown in FIG. 6 from an upward direction in the drawing and a displacement amount of the impact-absorbing structure 100C. FIG. 8 is a diagram illustrating deformation states of the impact-absorbing structure 100C at characteristic stages of the load-displacement curve shown in FIG. 7. In the present embodiment, as one example, the impact-absorbing structure 100C was configured in accordance with the same requirements as those of the above-described impact-absorbing structure 100.

FIGS. 7 and 8 show results of a simulation in which, for the impact-absorbing structure 100C configured in accordance with the same requirements as those of the impact-absorbing structure 100, a load is applied from an upward direction in the drawing, and a load (reaction force) of the impact-absorbing structure 100C and a displacement amount in an up-down direction in the drawing are simulated. By comparing FIG. 2 with FIG. 7 and comparing FIG. 3 with FIG. 8, it can be seen that the first to the firth and second stages in the simulation results for the impact-absorbing structure 100 correspond to the first and second stages in the simulation results for the impact-absorbing structure 100C, respectively, and that FIGS. 3(A) to 3(E) correspond to FIGS. 8(A) to 8(E). Accordingly, the impact-absorbing structure 100C shown in FIG. 6 can also achieve effects similar to those of the impact-absorbing structure 100 shown in FIG. 1.

In the impact-absorbing structure 100C, two second deformable portions 140 (first deformable portions 130 when viewed from a rear side) are provided; however, three or more second deformable portions 140 may be provided.

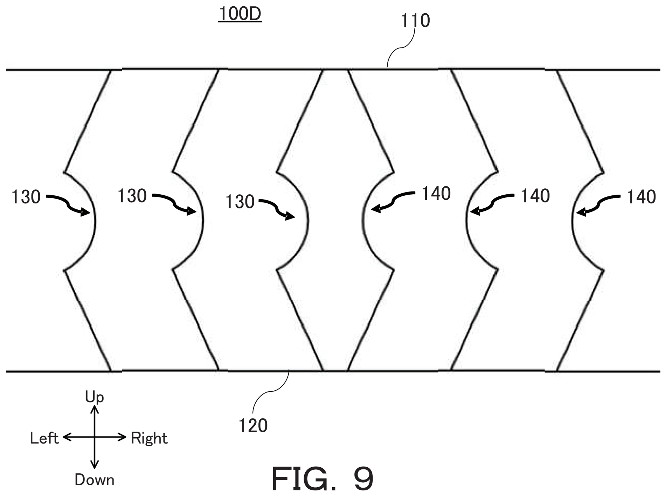

In the above-described embodiment, as in the impact-absorbing structures 100 and 100B shown in FIGS. 1 and 5, one first deformable portion 130 and one second deformable portion 140 are arranged to be mirror images of each other; however, the present disclosure is not limited thereto. For example, as in the impact-absorbing structure 100D shown in FIG. 9, a plurality (three in FIG. 9) of first deformable portions 130 and the same number of second deformable portions 140 may be arranged to be mirror images of each other. Further, the number of the first deformable portions 130 and the number of the second deformable portions 140 may be different.

In the above-described embodiment, as in the impact-absorbing structures 100 and 100B shown in FIGS. 1 and 5, one set of the first and second deformable portions 130 and 140 is provided; however, the present disclosure is not limited thereto. For example, a plurality of sets of the first and second deformable portions 130 and 140 of the impact-absorbing structure 100 may be arranged side by side (see FIG. 4). Further, a plurality of sets of the first and second deformable portions 130 and 140 of the impact-absorbing structure 100B may be arranged side by side. Further, n1 (n1 ≥ 1) sets of the first and second deformable portions 130 and 140 of the impact-absorbing structure 100 and n2 (n2 ≥ 1) sets of the first and second deformable portions 130 and 140 of the impact-absorbing structure 100B may be arranged side by side in any order. In addition, at least one of n3 (n3 ≥ 1) first deformable portions 130 and n4 (n4 ≥ 1) second deformable portions 140 may be added to these arrangements.

In the above-described embodiments, as in the impact-absorbing structures 100, 100B, 100C, and 100D shown in FIGS. 1, 5, 6, and 9, the first deformable portions 130 and/or the second deformable portions 140 are arranged side by side in a left-right direction in the drawing; however, the present disclosure is not limited thereto. In addition to or instead of this, the first deformable portions 130 and/or the second deformable portions 140 may be arranged side by side in a direction penetrating through the drawing sheet or the like.

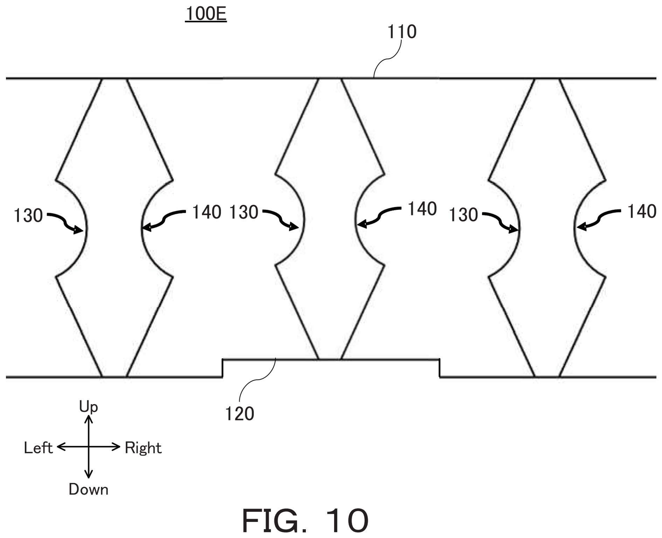

In the above-described embodiments, as in the impact-absorbing structures 100, 100B, and 100C shown in FIGS. 1, 5, and 6, the first and second support portions 110 and 120 are linear (flat-plate-shaped), and a distance therebetween is constant; however, the present disclosure is not limited thereto. For example, the first and second support portions 110 and 120 may be curved (see FIG. 4). In addition to or instead of this, the distance between the first and second support portions 110 and 120 may not be constant. For example, as in the impact-absorbing structure 100E shown in FIG. 10, the second support portion 120 may have a step, such that the distance between the first and second support portions 110 and 120 is not constant.

Although the present disclosure has been described above through the embodiments and examples of the disclosure, the above-described embodiments and examples do not limit the disclosure according to the claims. Further, forms obtained by combining features described in the embodiments and examples of the present disclosure may also be included in the technical scope of the present disclosure.

### [Appendix]

[1] A first impact-absorbing structure of the present disclosure is an impact-absorbing structure including: a first support portion and a second support portion disposed with a space therebetween; and a plurality of deformable portions each connected to the first and second support portions via a first corresponding connecting portion and a second corresponding connecting portion, respectively. Each of the plurality of deformable portions includes: a first beam portion and a second beam portion that extend linearly while being inclined to the same side with respect to a corresponding straight line passing through the first and second corresponding connecting portions, as the first and second beam portions become farther away from the first and second corresponding connecting portions; and a third beam portion connected to end portions of the first and second beam portions on sides opposite to the first and second corresponding connecting portions, the third beam portion extending in a curved shape that is convex toward a side approaching the corresponding straight line. At least a part of the plurality of deformable portions is arranged such that a first deformable portion, in which the first and second beam portions extend while being inclined to one side with respect to the corresponding straight line as the first and second beam portions become farther away from the first and second corresponding connecting portions, and a second deformable portion, in which the first and second beam portions extend while being inclined to the other side with respect to the corresponding straight line as the first and second beam portions become farther away from the first and second corresponding connecting portions, are alternately arranged in groups of one or more.

In the first impact-absorbing structure of the present disclosure, each of the plurality of deformable portions includes the first and second beam portions that extend linearly while being inclined to the same side with respect to the corresponding straight line passing through the first and second corresponding connecting portions, as the first and second beam portions become farther away from the first and second corresponding connecting portions, and the third beam portion connected to end portions of the first and second beam portions on the sides opposite to the first and second corresponding connecting portions, the third beam portion extending in the curved shape that is convex toward the side approaching the corresponding straight line. Further, at least the part of the plurality of deformable portions is arranged such that the first deformable portion, in which the first and second beam portions extend while being inclined to one side with respect to the corresponding straight line as the first and second beam portions become farther away from the first and second corresponding connecting portions, and second deformable portion, in which the first and second beam portions extend while being inclined to the other side with respect to the corresponding straight line as the first and second beam portions become farther away from the first and second corresponding connecting portions, are alternately arranged in groups of one or more. As a result, it is possible to secure a larger amount of absorbable collision energy while suppressing a reaction force generated at an initial stage of collision. The inventors confirmed this by simulations or the like.

[2] In the first impact-absorbing structure of the present disclosure (the impact-absorbing structure described in [1] above), the plurality of deformable portions may include the same number of the first deformable portions, in which the first and second beam portions extend while being inclined to one side with respect to the corresponding straight line as the first and second beam portions become farther away from the first and second corresponding connecting portions, and the second deformable portions, in which the first and second beam portions extend while being inclined to the other side with respect to the corresponding straight line as the first and second beam portions become farther away from the first and second corresponding connecting portions.

[3] A second impact-absorbing structure of the present disclosure is an impact-absorbing structure including: a first support portion and a second support portion disposed with a space therebetween; and a plurality of deformable portions each connected to the first and second support portions via a first corresponding connecting portion and a second corresponding connecting portion, respectively. Each of the plurality of deformable portions includes: a first beam portion and a second beam portion that extend linearly while being inclined to the same side with respect to a corresponding straight line passing through the first and second corresponding connecting portions, as the first and second beam portions become farther away from the first and second corresponding connecting portions; and a third beam portion connected to end portions of the first and second beam portions on sides opposite to the first and second corresponding connecting portions, the third beam portion extending in a curved shape that is convex toward a side approaching the corresponding straight line. Each of the plurality of deformable portions is configured such that, when a load in a direction along the corresponding straight line is applied to at least one of the first and second support portions, with an increase in a displacement amount of the distance between the first and second support portions, a first stage occurs in which an inclination angle of each of the first and second beam portions with respect to the corresponding straight line increases while a curvature of the third beam portion decreases until a part of each of the first and second beam portions comes into contact with the first and second support portions; and a second stage occurs in which, in a state where a part of each of the first and second beam portions is in contact with the first and second support portions, the curvature of the third beam portion increases, in this order.

In the second impact-absorbing structure of the present disclosure, each of the plurality of deformable portions includes the first and second beam portions that extend linearly while being inclined to the same side with respect to a corresponding straight line passing through the first and second corresponding connecting portions, as the first and second beam portions become farther away from the first and second corresponding connecting portions, and the third beam portion connected to end portions of the first and second beam portions on the sides opposite to the first and second corresponding connecting portions, the third beam portion extending in the curved shape that is convex toward the side approaching the corresponding straight line. Further, each of the plurality of deformable portions is configured such that, when the load in the direction along the corresponding straight line is applied to at least one of the first and second support portions, with an increase in a displacement amount of the distance between the first and second support portions, the first stage occurs in which the inclination angle of each of the first and second beam portions with respect to the corresponding straight line increases while the curvature of the third beam portion decreases until the part of each of the first and second beam portions comes into contact with the first and second support portions, and the second stage occurs in which, in the state where the part of each of the first and second beam portions is in contact with the first and second support portions, the curvature of the third beam portion increases, in this order. As a result, it is possible to secure a larger amount of absorbable collision energy while suppressing a reaction force generated at an initial stage of collision. The inventors confirmed this by simulations or the like.

[4] A third impact-absorbing structure of the present disclosure is an impact-absorbing structure including: a first support portion and a second support portion disposed with a space therebetween; and a plurality of deformable portions each connected to the first and second support portions via a first corresponding connecting portion and a second corresponding connecting portion, respectively. Each of the plurality of deformable portions includes: a first beam portion and a second beam portion that extend linearly while being inclined to the same side with respect to a corresponding straight line passing through the first and second corresponding connecting portions, as the first and second beam portions become farther away from the first and second corresponding connecting portions; and a third beam portion connected to end portions of the first and second beam portions on sides opposite to the first and second corresponding connecting portions, the third beam portion extending in a curved shape that is convex toward a side approaching the corresponding straight line. The impact-absorbing structure is configured such that, when a load in a direction along the corresponding straight line is applied to at least one of the first and second support portions, the impact-absorbing structure exhibits a first displacement region in which a displacement amount increases while maintaining a first reaction force range, and a second displacement region in which the displacement amount increases while maintaining a second reaction force range that is larger than the first reaction force range.

In the third impact-absorbing structure of the present disclosure, each of the plurality of deformable portions includes the first and second beam portions that extend linearly while being inclined to the same side with respect to the corresponding straight line passing through the first and second corresponding connecting portions, as the first and second beam portions become farther away from the first and second corresponding connecting portions, and the third beam portion connected to end portions of the first and second beam portions on the sides opposite to the first and second corresponding connecting portions, the third beam portion extending in the curved shape that is convex toward the side approaching the corresponding straight line. Further, the impact-absorbing structure is configured such that, when the load in the direction along the corresponding straight line is applied to at least one of the first and second support portions, the impact-absorbing structure exhibits the first displacement region in which the displacement amount increases while maintaining the first reaction force range, and second displacement region in which the displacement amount increases while maintaining second reaction force range that is larger than the first reaction force range. As a result, it is possible to secure a larger amount of absorbable collision energy while suppressing a reaction force generated at an initial stage of collision. The inventors confirmed this by simulations or the like.

[5] In any one of the first to third impact-absorbing structures of the present disclosure (the impact-absorbing structure described in any one of [1] to [4] above), the impact-absorbing structure may be integrally formed.

[6] A bumper core material of the present disclosure is characterized by including any one of the first to third impact-absorbing structures of the present disclosure (the impact-absorbing structure described in any one of [1] to [5] above). Therefore, the bumper core material can exhibit effects similar to those exhibited by the first to third impact-absorbing structures of the present disclosure.

[7] A fourth impact-absorbing structure of the present disclosure is an impact-absorbing structure including: a first support portion and a second support portion disposed with a space therebetween in a first direction; and a pair of deformable portions provided between the first and second support portions. The pair of deformable portions include: a pair of first linear beam portions that extend such that a distance therebetween gradually increases as the pair of first linear beam portions extend from the first support portion toward the first direction; a pair of second linear beam portions that extend such that a distance therebetween gradually increases as the pair of second linear beam portions extend from the second support portion toward a direction opposite to the first direction; and a pair of arcuate beam portions provided between the pair of first linear beam portions and the pair of second linear beam portions and arranged such that convex portions of respective arcs face each other. The impact-absorbing structure is configured such that, when a load is applied to the first support portion or the second support portion along the first direction, the impact-absorbing structure provides a first displacement region in which the impact-absorbing structure is displaced while maintaining a first reaction force range, and a second displacement region in which the impact-absorbing structure is displaced while maintaining a second reaction force range that is larger than the first reaction force range.

In the fourth impact-absorbing structure of the present disclosure, the pair of deformable portions includes the pair of first linear beam portions that extend such that the distance therebetween gradually increases as the pair of first linear beam portions extend from the first support portion toward the first direction, the pair of second linear beam portions that extend such that the distance therebetween gradually increases as the pair of second linear beam portions extend from the second support portion toward the direction opposite to the first direction, and the pair of arcuate beam portions provided between the pair of first linear beam portions and the pair of second linear beam portions and arranged such that convex portions of respective arcs face each other. Further, the impact-absorbing structure is configured such that, when the load is applied to the first support portion or the second support portion along the first direction, the impact-absorbing structure provides the first displacement region in which the impact-absorbing structure is displaced while maintaining the first reaction force range, and the second displacement region in which the impact-absorbing structure is displaced while maintaining the second reaction force range that is larger than the first reaction force range. As a result, it is possible to secure a sufficiently large amount of absorbable collision energy while suppressing a reaction force generated at an initial stage of collision. The inventors confirmed this by simulations or the like.

[8] In the fourth impact-absorbing structure of the present disclosure (the impact-absorbing structure described in [7] above), the impact-absorbing structure may be integrally formed.

## Claims

1. An impact-absorbing structure comprising:
a first support portion and a second support portion disposed with a space therebetween; and
a plurality of deformable portions each connected to the first and second support portions via a first corresponding connecting portion and a second corresponding connecting portion, respectively,
wherein each of the plurality of deformable portions includes:
a first beam portion and a second beam portion that extend linearly while being inclined to the same side with respect to a corresponding straight line passing through the first and second corresponding connecting portions, as the first and second beam portions become farther away from the first and second corresponding connecting portions; and
a third beam portion connected to end portions of the first and second beam portions on sides opposite to the first and second corresponding connecting portions, the third beam portion extending in a curved shape that is convex toward a side approaching the corresponding straight line,
and at least a part of the plurality of deformable portions is arranged such that one or more first deformable portions, in which the first and second beam portions extend while being inclined to one side with respect to the corresponding straight line as the first and second beam portions become farther away from the first and second corresponding connecting portions, and one or more second deformable portions, in which the first and second beam portions extend while being inclined to the other side with respect to the corresponding straight line as the first and second beam portions become farther away from the first and second corresponding connecting portions, are alternately arranged in groups of one or more.

2. The impact-absorbing structure according to claim 1,
wherein the plurality of deformable portions include the same number of the first deformable portions, in which the first and second beam portions extend while being inclined to one side with respect to the corresponding straight line as the first and second beam portions become farther away from the first and second corresponding connecting portions, and the second deformable portions, in which the first and second beam portions extend while being inclined to the other side with respect to the corresponding straight line as the first and second beam portions become farther away from the first and second corresponding connecting portions.

3. An impact-absorbing structure comprising:
a first support portion and a second support portion disposed with a space therebetween; and
a plurality of deformable portions each connected to the first and second support portions via a first corresponding connecting portion and a second corresponding connecting portion, respectively,
wherein each of the plurality of deformable portions includes:
a first beam portion and a second beam portion that extend linearly while being inclined to the same side with respect to a corresponding straight line passing through the first and second corresponding connecting portions, as the first and second beam portions become farther away from the first and second corresponding connecting portions; and
a third beam portion connected to end portions of the first and second beam portions on sides opposite to the first and second corresponding connecting portions, the third beam portion extending in a curved shape that is convex toward a side approaching the corresponding straight line,
and wherein each of the plurality of deformable portions is configured such that, when a load in a direction along the corresponding straight line is applied to at least one of the first and second support portions, with an increase in a displacement amount of the distance between the first and second support portions,
a first stage occurs in which an inclination angle of each of the first and second beam portions with respect to the corresponding straight line increases while a curvature of the third beam portion decreases until a part of each of the first and second beam portions comes into contact with the first and second support portions; and
a second stage occurs in which, in a state where a part of each of the first and second beam portions is in contact with the first and second support portions, the curvature of the third beam portion increases,
in this order.

4. An impact-absorbing structure comprising:
a first support portion and a second support portion disposed with a space therebetween; and
a plurality of deformable portions each connected to the first and second support portions via a first corresponding connecting portion and a second corresponding connecting portion, respectively,
wherein each of the plurality of deformable portions includes:
a first beam portion and a second beam portion that extend linearly while being inclined to the same side with respect to a corresponding straight line passing through the first and second corresponding connecting portions, as the first and second beam portions become farther away from the first and second corresponding connecting portions; and
a third beam portion connected to end portions of the first and second beam portions on sides opposite to the first and second corresponding connecting portions, the third beam portion extending in a curved shape that is convex toward a side approaching the corresponding straight line,
and wherein the impact-absorbing structure is configured such that, when a load in a direction along the corresponding straight line is applied to at least one of the first and second support portions,
the impact-absorbing structure exhibits a first displacement region in which a displacement amount increases while maintaining a first reaction force range, and a second displacement region in which the displacement amount increases while maintaining a second reaction force range that is larger than the first reaction force range.

5. The impact-absorbing structure according to any one of claims 1, 3, and 4,
wherein the impact-absorbing structure is integrally formed.

6. A bumper core member comprising the impact-absorbing structure according to any one of claims 1, 3, and 4.

7. An impact-absorbing structure comprising:
a first support portion and a second support portion disposed with a space therebetween in a first direction; and
a pair of deformable portions provided between the first and second support portions,
wherein the pair of deformable portions include:
a pair of first linear beam portions that extend such that a distance therebetween gradually increases as the pair of first linear beam portions extend from the first support portion toward the first direction;
a pair of second linear beam portions that extend such that a distance therebetween gradually increases as the pair of second linear beam portions extend from the second support portion toward a direction opposite to the first direction; and
a pair of arcuate beam portions provided between the pair of first linear beam portions and the pair of second linear beam portions and arranged such that convex portions of respective arcs face each other,
and wherein the impact-absorbing structure is configured such that, when a load is applied to the first support portion or the second support portion along the first direction,
the impact-absorbing structure provides a first displacement region in which the impact-absorbing structure is displaced while maintaining a first reaction force range, and
a second displacement region in which the impact-absorbing structure is displaced while maintaining a second reaction force range that is larger than the first reaction force range.

8. The impact-absorbing structure according to claim 7,
wherein the impact-absorbing structure is integrally molded.
